# EUROPÄISCHE PATENTANMELDUNG

(11) **EP 1 764 969 A1**
(43) Veröffentlichungstag der Anmeldung: **21.03.2007**
(21) Anmeldenummer: 03090045.0
(22) Anmeldetag: 20.02.2003
(51) Int. Cl.: H04L 29/06, H04L 29/08

(54) **Verfahren zur anonymisierten Kommunikation zwischen einem mobilen Kommunikationsendgerät und einem WAP-Server für die Nutzung des WAP-Service**

(71) Anmelder: SIEMENS AKTIENGESELLSCHAFT, 80333 München (DE)
(72) Erfinder: Lemke, Michael, 13156 Berlin (DE); Schneider, Frank-Peter, 10439 Berlin (DE)

(57) **Zusammenfassung**

Die Erfindung betrifft ein Verfahren zur anonymisierten Kommunikation mit einem Dienstendgerät (DEG) eines Dienstanbieters unter Nutzung des WAP-Service, welches mit einem Netzanschlussknoten (NAK) eines Telekommunikationsnetzes (TKN) verbunden ist, bei dem eine von einem mit den Telekommunikationsnetz verbundenen Kommunikationsendgerät zu dem Dienstendgerät abgesandte Nachricht (1), welche als Absender- information ein telekommunikationsnetzseitig festgesetztes Kennzeichen (MSISDN) enthält, zu dem Netzanschlussknoten übertragen wird, auf ein Eintreffen der Nachricht (1) bei dem Netzanschlussknoten hin von einer Anonymisierungseinheit (AE) des Telekommunikationsnetzes eine dem Kennzeichen (MSISDN) zugeordnete (Z) anonymisierte Kennung (5136) ermittelt (2,4,5) wird, das Kennzeichen (MSISDN) der Nachricht durch die Kennung (5136) ersetzt wird, und daraufhin die so veränderte Nachricht (6) zu dem Dienstendgerät weitergeleitet wird.

## Beschreibung

Die Erfindung betrifft ein Verfahren zur Kommunikation mit einem Dienstendgerät eines Dienstanbieters, welches mit einem Netzanschlussknoten eines Telekommunikationsnetzes verbunden ist.

Für die Teilnehmer an modernen Telekommunikationsnetzen werden zunehmend Dienste durch Dienstanbieter angeboten, welche unabhängig von den Betreibern der Telekommunikationsnetze agieren und welche technische Einrichtungen zum Erbringen und Anbieten von Diensten unabhängig von den technischen Einrichtungen der Telekommunikationsnetze installieren. Derartige Dienste können beispielsweise den Kauf, Verkauf oder Tausch von Waren oder Dienstleistungen beim sogenannten elektronischen Handel (E-Commerce), das Durchführen von Zahlungsvorgängen unter Benutzung von sogenannten Zahlungsservern oder den Handel unter Benutzung von Mobiltelefonen (M-Commerce) umfassen. Zum Durchführen dieser Dienste werden die diese Dienste erbringenden Dienstendgeräte (z.B. Internetrechner, Server oder Steuerungsrechner mit angeschlossenen Datenbanken) mit den Telekommunikationsnetzen verbunden. Die Dienstendgeräte werden jedoch unabhängig von den Telekommunikationsnetzen und außerhalb der Kontrolle von Betreibern der Telekommunikationsnetze betrieben.

Der Erfindung liegt die Aufgabe zugrunde, ein Verfahren anzugeben, mit dem auf eine einen Datenschutz gewährleistende Art und Weise eine Kommunikation mit einem Dienstendgerät eines Dienstanbieters durchgeführt werden kann.

Diese Aufgabe wird erfindungsgemäß gelöst durch ein Verfahren zur Kommunikation mit einem Dienstendgerät eines Dienstanbieters, welches mit einem Netzanschlussknoten eines Telekommunikationsnetzes verbunden ist, bei dem eine von einem mit dem Telekommunikationsnetz verbundenen Kommunikationsendgerät zu dem Dienstendgerät abgesandte Nachricht, welche als Absenderinformation ein telekommunikationsnetzseitig festgesetztes Kennzeichen enthält, zu dem Netzanschlussknoten übertragen wird, auf ein Eintreffen der Nachricht bei dem Netzanschlussknoten hin von einer Anonymisierungseinheit des Telekommunikationsnetzes eine dem Kennzeichen zugeordnete anonymisierte Kennung ermittelt wird, das Kennzeichen der Nachricht durch die Kennung ersetzt wird, und daraufhin die so veränderte Nachricht zu dem Dienstendgerät weitergeleitet wird. Hierbei wird es dem Kommunikationsendgerät ermöglicht, Nachrichten zu dem Dienstendgerät zu senden. Dabei wird vorteilhafterweise die Identität des Kommunikationsendgerätes verborgen, da dem Dienstendgerät lediglich eine anonymisierte Kennung bekannt wird. Unter eine anonymisierten Kennung soll eine Datenmenge (beispielsweise eine aus Buchstaben, Ziffern und/oder Sonderzeichen bestehende Zeichenkette) verstanden werden, aus der auf Seiten des Dienstendgerätes keinerlei Rückschlüsse auf das Kommunikationsendgerät bzw. auf einen Benutzer des Kommunikationsendgerätes gezogen werden können.

Die Aufgabe wird ebenfalls erfindungsgemäß gelöst durch ein Verfahren zur Kommunikation mit einem Dienstendgerät eines Dienstanbieters, welches mit einem Netzanschlussknoten eines Telekommunikationsnetzes verbunden ist, bei dem eine von dem Dienstendgerät zu einem mit dem Telekommunikationsnetz verbundenen Kommunikationsendgerät abgesandte Nachricht, welche als Adressinformation eine anonymisierte Kennung enthält, zu dem Netzanschlussknoten übertragen wird, auf ein Eintreffen der Nachricht bei dem Netzanschlussknoten hin von einer Anonymisierungseinheit des Telekommunikationsnetzes aufgrund einer vorgewählten Zuordnung ein telekommunikationsnetzseitig festgesetztes, der Kennung zugeordnetes Kennzeichen ermittelt wird, die Kennung der Nachricht durch das Kennzeichen ersetzt wird, und daraufhin die so veränderte Nachricht zu dem Kommunikationsendgerät weitergeleitet wird. Dabei wird es dem Dienstendgerät vorteilhafterweise ermöglicht, Nachrichten an das Kommunikationsendgerät zu übertragen, obwohl dem Dienstendgerät nur die anonymisierte Kennung bekannt ist (nicht jedoch das telekommunikationsnetzseitig festgesetzte Kennzeichen, welches üblicherweise bei der Übersendung von Nachrichten zu deren Adressierung verwendet wird). Auf Seiten des Dienstendgerätes können dabei vorteilhafterweise die üblichen Nachrichtenübertragungstechnologien angewendet werden, wobei die Nachricht jedoch mit der anonymisierten Kennung anstatt mit dem Kennzeichen adressiert wird.

Die erfindungsgemäßen Verfahren können so ausgestaltet sein, dass als Anonymisierungseinheit ein zentraler Knoten des Telekommunikationsnetzes verwendet wird. Durch Nutzung eines zentralen Netzknotens als Anonymisierungseinheit kann vorteilhafterweise eine zentrale Stelle des Telekommunikationsnetzes für die Kommunikation mit einer Vielzahl von Kommunikationsendgeräten und einer Vielzahl von Dienstendgeräten verwendet werden. Dabei kann insbesondere die Kommunikation mit verschiedensten Diensten verschiedenster Dienstendgeräte unter Nutzung lediglich einer Anonymisierungseinheit durchgeführt werden.

Bei den erfindungsgemäßen Verfahren können von der Anonymisierungseinheit neben dem Kennzeichen und der zugeordneten Kennung weitere dem Teilnehmer zugehörige Teilnehmerdaten (z.B. zentral im Telekommunikationsnetz) abgespeichert werden.

Die Verfahren können so ablaufen, dass auf eine die Kennung enthaltende Abfragenachricht des Dienstendgerätes hin mindestens einzelne der mit der Kennung abgespeicherten Teilnehmerdaten zu dem Dienstendgerät übertragen werden. Dadurch wird dem Dienstendgerät vorzugsweise ermöglicht, von dem Telekommunikationsnetz telekommunikationsnetzinterne Teilnehmerdaten zur Nutzung bei der Erbringung des jeweiligen Dienstes abzufragen, obwohl dem Dienstendgerät lediglich die dem Kommunikationsendgerät zugeordnete anonymisierte Kennung bekannt ist.

Die erfindungsgemäßen Verfahren können auch so ablaufen, dass auf eine die Kennung enthaltende Administrationsnachricht des Dienstendgerätes hin von der Anonymisierungseinheit der Inhalt mindestens einzelner der mit der Kennung abgespeicherten Teilnehmerdaten verändert wird. Mit Hilfe einer derartigen Administrationsnachricht ist es dem Dienstendgerät vorteilhafterweise möglich, die Art und Weise zu beeinflussen, auf die die telekommunikationsnetzinterne Anonymisierungseinheit Teilnehmerdaten erstellt, verändert oder abspeichert. Das Dienstendgerät kann also bei Kenntnis der anonymisierten Kennung die Funktionsweise der Anonymisierungseinheit bezüglich der Teilnehmerdaten beeinflussen.

Die erfindungsgemäßen Verfahren können auch so ablaufen, dass auf eine die Kennung und einzuschreibende Teilnehmerdaten enthaltende Einschreibnachricht des Dienstendgerätes hin von der Anonymisierungseinheit die einzuschreibende Teilnehmerdaten neben dem Kennzeichen und der zugeordneten Kennung abgespeichert werden. Dadurch wird dem Dienstendgerät vorzugsweise sogar ermöglicht, bei dem Dienstendgerät vorliegende Teilnehmerdaten dem betreffenden Teilnehmer über die anonymisierte Kennung zuzuordnen und in dem Telekommunikationsnetz (z.B. zentral) abzuspeichern.

Als Teilnehmerdaten können Gültigkeitsdaten verwendet werden, welche Informationen über eine zeitliche Gültigkeitsdauer der Kennung beinhalten. Mit Hilfe derartiger Gültigkeitsdaten kann festgesetzt werden, in welchen Zeiträumen die anonymisierte Kommunikation jeweils unter Verwendung ein- und derselben Kennung durchgeführt werden kann, in welchen Zeiträumen also die Kennung für Kommunikationszwecke gültig ist.

Dabei können die erfindungsgemäßen Verfahren so ausgestaltet werden, dass bei einem Ablauf der Gültigkeitsdauer von der Anonymisierungseinheit das jeweilige Ersetzen von der Kennung und von dem Kennzeichen unterbunden wird. Durch diese Überprüfung der Gültigkeitsdauer kann die Sicherheit des erfindungsgemäßen Verfahrens wesentlich erhöht werden, da eine z.B. Dritten bekannt gewordene anonymisierte Kennung nach Ablauf der Gültigkeitsdauer nicht mehr (missbräuchlich) verwendet werden kann.

Bei den erfindungsgemäßen Verfahren kann als Administrationsnachricht eine Gültigkeitsdauer-Administrationsnachricht von dem Dienstendgerät zu der Anonymisierungseinheit übertragen werden, woraufhin von der Anonymisierungseinheit diejenigen Gültigkeitsdaten, die dem Teilnehmer mit der jeweiligen Kennung beigeordnet sind, derart verändert werden, dass die zeitliche Gültigkeitsdauer verkürzt oder verlängert wird. Bei dieser Ausgestaltungsform der erfindungsgemäßen Verfahren kann das Dienstendgerät vorteilhafterweise die Gültigkeitsdauer von bereits bei der Anonymisierungseinheit abgespeicherten anonymen Kennungen oder von in Zukunft bei der Anonymisierungseinheit neu zu erstellenden Kennungen beeinflussen. So kann das netzexterne Dienstendgerät vorgeben, wie lange die anonymisierte Kennung eines bestimmten Teilnehmers für die Kommunikation gültig sein soll.

Als Teilnehmerdaten können Ortsdaten verwendet werden, welche Informationen über den aktuellen Aufenthaltsort des Kommunikationsendgerätes beinhalten.

Als Teilnehmerdaten können auch Präsenzdaten verwendet werden, welche Informationen über die Erreichbarkeit des Teilnehmers über das Kommunikationsendgerät beinhalten.

Als Teilnehmerdaten können Bonusdaten verwendet werden, welche Informationen über bereits durchgeführte Dienstnutzungen des Teilnehmers beinhalten.

Als Teilnehmerdaten können Tarifdaten verwendet werden, welche Informationen über eine Abrechnung von teilnehmerseitigen Dienstnutzungen beinhalten.

Als Teilnehmerdaten können auch Präferenzdaten verwendet werden, welche Informationen über die Art von bereits durchgeführten Dienstnutzungen des Teilnehmers beinhalten. Bei den sieben vorstehend genannten Ausführungsformen der erfindungsgemäßen Verfahren ist besonders vorteilhaft, dass dem Dienstendgerät bei Kenntnis lediglich der anonymen Kennung ermöglicht wird, auf telekommunikationsnetzinterne Teilnehmerdaten wie Gültigkeitsdaten, Ortsdaten (location-data), Präsenzdaten (presence-data), Bonusdaten, Tarifdaten und Präferenzdaten zuzugreifen und diese zur Erbringung von Diensten und zur Durchführung der Kommunikation z.B. zu den jeweiligen Kommunikationsendgeräten zu verwenden. Auf Seiten des Telekommunikationsnetzes ist dabei besonders vorteilhaft, dass diese netzinternen Teilnehmerdaten auf eine anonymisierte Art und Weise, in einer anonymisierten Form an eine netzexterne Diensteinrichtung abgegeben werden. Da der netzexternen Diensteinrichtung die wahre Identität des jeweiligen Teilnehmers nicht bekannt wird, wird vorteilhafterweise verhindert, dass die Teilnehmerdaten auf eine von Seiten des Telekommunikationsnetzes unerwünschte Art und Weise (beispielsweise zum Durchführen weiterer Diensterbringungsgeschäfte unter Umgehung des Telekommunikationsnetzes) verwendet werden. Vielmehr können diese netzinternen Teilnehmerdaten lediglich unter Benutzung des Telekommunikationsnetzes sinnvoll verwendet werden.

Die erfindungsgemäßen Verfahren können so ausgestaltet sein, dass von einer Anonymisierungseinheit des Telekommunikationsnetzes die dem Kennzeichen zugeordnete anonymisierte Kennung ermittelt wird, indem aus einem Datenspeicher ausgelesen wird, ob zu dem Kennzeichen bereits eine zugeordnete Kennung abgespeichert ist, bei Vorliegen einer solchen abgespeicherten Kennung diese abgespeicherte Kennung als ermittelte Kennung verwendet wird, oder bei Nichtvorliegen einer solchen abgespeicherten Kennung eine neue Kennung erstellt und dem Kennzeichen zugeordnet wird, diese neue Kennung zusammen mit dem Kennzeichen in dem Datenspeicher abgespeichert wird und diese neue Kennung als ermittelte Kennung verwendet wird. Dabei kann vorteilhafterweise ein- und dieselbe anonymisierte Kennung für mehrere verschiedene Kommunikationsvorgänge mit dem betreffenden Kommunikationsendgerät verwendet werden. Dem Dienstendgerät wird damit vorteilhafterweise ermöglicht, zu erkennen, ob ein Kommunikationsendgerät wiederholt Dienste dieses Dienstendgerätes nutzt. Dies ermöglicht dem Dienstendgerät, das betreffende Kommunikationsendgerät bzw. dessen Benutzer als "Stammkunden" zu erkennen und diesem gegebenenfalls Vorzugskonditionen einzuräumen. Jedoch wird auch in diesem Fall die Identität des Kommunikationsendgerätes bzw. des Benutzers dieses Kommunikationsendgerätes vor dem Bekanntwerden geschützt, da dem Dienstendgerät lediglich die anonymisierte Kennung bekannt ist.

Zur weiteren Erläuterung ist in
- Figur 1: ein Ausführungsbeispiel eines Telekommunikationsnetzes mit beispielhaften Verfahrensschritten und in
- Figur 2: ein Ausführungsbeispiel von in einem Datenspeicher des Telekommunikationsnetzes abgespeicherten Kennzeichen, Kennungen und Teilnehmerdaten dargestellt.

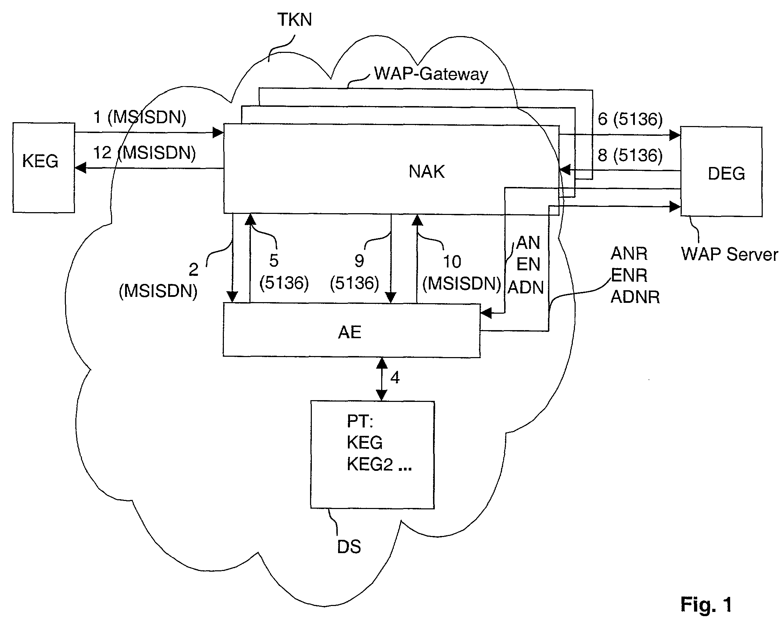

In Figur 1 ist schematisch ein Telekommunikationsnetz TKN dargestellt, bei dem es sich beispielsweise um ein Mobilfunknetz (z.B. der zweiten oder dritten Generation), um ein Telefonfestnetz (z.B. analoges Festnetz oder ISDN-Festnetz) oder auch um ein anderes elektronisches Telekommunikationsnetz wie beispielsweise das Internet handeln kann. Das Telekommunikationsnetz wird von einem Netzwerkoperator (MNO = Mobile Network Operator) betrieben; die Elemente des Telekommunikationsnetzes liegen im Einflussbereich des Netzwerkoperators. Für dieses Ausführungsbeispiel sei angenommen, dass das Telekommunikationsnetz TKN ein Mobilfunknetz der zweiten Generation ist. Mit diesem Telekommunikationsnetz TKN verbunden ist ein Kommunikationsendgerät KEG, bei dem es sich im Ausführungsbeispiel um ein Mobiltelefon handelt. In anderen Ausführungsbeispielen könnte es sich bei dem Kommunikationsendgerät KEG jedoch auch um ein Festnetztelefon, einen Internet-Rechner, einen tragbaren Computer mit Mobilfunkschnittstelle, einen Palmtop oder einen persönlichen digitalen Assistenten (PDA = Personal Digital Assistant) handeln. Auf der rechten Seite der Figur 1 ist schematisch ein telekommunikationsnetzexternes, aber mit dem Telekommunikationsnetz verbundenes, Dienstendgerät DEG dargestellt. Ein Dienstendgerät DEG ist ein Gerät, mit dem ein Dienstanbieter einen Dienst (z.B. die elektronische Übermittlung von Daten) für einen Dienstnutzer (in diesem Fall für das Kommunikationsendgerät KEG) anbietet und/oder durchführt. In diesem Ausführungsbeispiel handelt es sich bei dem Dienstendgerät um einen sogenannten WAP-Server (WAP = Wireless Application Protocol), welcher den Dienst der Bereitstellung und Übermittlung von sogenannten WAP-Seiten (Informationsseiten zur Darstellung auf Mobiltelefonen) anbietet und durchführt. Allgemein können derartige Dienstendgeräte durch verschiedenste Rechner oder Server gebildet werden, beispielsweise durch Internetserver (welche den Dienst der Bereitstellung von Internetdaten bzw. den Dienst des Ermöglichens des Internetsurfens anbieten), SMS-Server (welche den Dienst der Übermittlung von SMS-Nachrichten anbieten), E-Commerce-Server (welche den Dienst der Bereitstellung von elektronischen Handelsportalen anbieten) oder Payment-Server (welche den Dienst des Abwickelns von Zahlungsvorgängen zur Verfügung stellen). Die von derartigen netzexternen Dienstendgeräten erbrachten Dienste werden auch als "Third Party Applications" und die Dienstanbieter als "Third Party Application Service Provider" bezeichnet.

Das Dienstendgerät DEG ist mit einem Netzanschlussknoten NAK des Telekommunikationsnetzes TKN verbunden. Derartige Netzanschlussknoten NAK werden auch als Gateway bezeichnet; im Ausführungsbeispiel wird der Netzanschlussknoten NAK durch ein an sich bekanntes WAP-Gateway gebildet. Im Detail betrachtet kann die Kommunikation zwischen dem Kommunikationsendgerät KEG, dem Telekommunikationsnetz TKN und dem Dienstendgerät DEG unter Nutzung von verschiedensten Träger-Technologien ("Carrier"-Technologien) wie beispielsweise WAP oder SMS durchgeführt werden. Dementsprechend sind als Netzanschlussknoten passende Gateways (z.B. WAP-Gateway, SMS-Gateway) einzusetzen. Dabei kann eine - unten näher erläuterte - Anonymisierungseinheit AE mit mehreren Gateways verbunden sein und von diesen genutzt werden.

Zu Beginn des Kommunikationsverfahrens wird von dem Kommunikationsendgerät KEG eine Nachricht 1 an das Dienstendgerät DEG gesendet. Diese Nachricht 1 enthält als Absenderinformation ein telekommunikationsnetzseitig festgesetztes Kennzeichen des Kommunikationsendgerätes bzw. des Benutzers des Kommunikationsendgerätes, in diesem Fall die Mobilfunktelefonnummer MSISDN (MSISDN = Mobile Station ISDN-Number) des Mobiltelefons KEG. Diese Nachricht 1 wird auf ihrem Weg zu dem Dienstendgerät DEG zunächst einmal zu dem Netzanschlussknoten NAK übertragen. Bei der Nachricht 1 handelt es sich in diesem Ausführungsbeispiel um eine Bestell-Nachricht, mit der das Dienstendgerät DEG veranlasst werden soll, regelmäßig Textinformationen in Form von WAP-Seiten an das Kommunikationsendgerät KEG zu senden (Push-Dienst).

Sobald die Nachricht 1 bei dem Netzanschlussknoten NAK eintrifft, liest dieser Netzanschlussknoten NAK das Kennzeichen MSISDN aus der Nachricht 1 aus und sendet eine Anfragenachricht 2 mit diesem Kennzeichen MSISDN an die Anonymisierungseinheit AE. Die Anonymisierungseinheit AE (bei der sich beispielsweise um einen Rechner handeln kann) überprüft, ob für das Kennzeichen MSISDN bereits (z.B. in einem früheren Verfahrensablauf) eine anonymisierte Kennung erzeugt, dem Kennzeichen zugeordnet und in dem Telekommunikationsnetz abgespeichert wurde. Dazu ist die Anonymisierungseinheit AE mit einem Datenspeicher DS verbunden, in dem eine Profiltabelle PT abgespeichert ist. Diese Profiltabelle PT enthält Informationen über eine Mehrzahl von Kommunikationsendgeräten; in diesem Ausführungsbeispiel über das Kommunikationsendgerät KEG und über ein weiteres, in der Figur 1 nicht dargestelltes Kommunikationsendgerät KEG2.

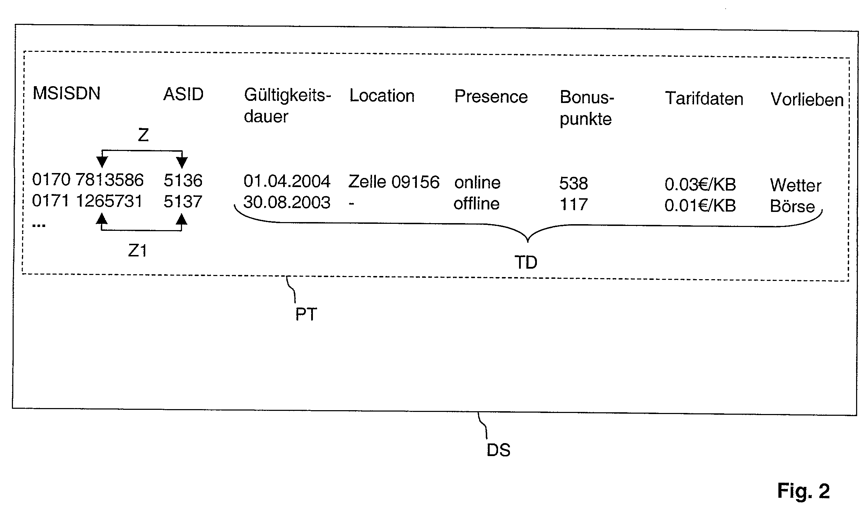

In Figur 2 ist beispielhaft eine derartige Profiltabelle PT des Datenspeichers DS dargestellt. Diese Profiltabelle PT enthält zwei Tabellenzeilen, wobei die erste Tabellenzeile das Kommunikationsendgerät KEG betreffende Daten enthält und wobei die zweite Tabellenzeile das weitere Kommunikationsendgerät KEG2 betreffende Daten enthält. In der ersten Tabellenzeile ist abgespeichert, dass das Kommunikationsendgerät KEG ein Kennzeichen in Form der MSISDN "0170 7813586" aufweist. Diesem Kennzeichen ist eine Kennung in Form der Zeichenkette "5136" zugeordnet; die Zuordnung ist durch den Pfeil Z symbolisiert. Die anonymisierte Kennung "5136", aus der sich keinerlei Rückschluss auf das Kommunikationsendgerät KEG bzw. auf dessen Benutzer ziehen lässt, wird in der zweiten Tabellenspalte als "ASID" (Anonymized Subscriber Identity) bezeichnet und stellt also eine anonyme Identitätsangabe für das Kommunikationsendgerät KEG des Telekommunikationsteilnehmers bzw. für diesen Telekommunikationsteilnehmer dar. In den weiteren Spalten der Profiltabelle PT sind verschiedene Teilnehmerdaten (welche das Kommunikationsendgerät KEG bzw. dessen Benutzer (=Teilnehmer) betreffen) dargestellt. Diese Teilnehmerdaten umfassen folgende Informationen:
Gültigkeitsdauer: 1. April 2004
   Die Kennung "5136" und die Zuordnung dieser Kennung zu dem Kennzeichen "0170 7813586" ist gültig bis zum 1. April 2004 und wird nur bis zu diesem Zeitpunkt von der Anonymisierungseinheit AE verwendet.
Location: Zelle 09156
   Das Mobiltelefon KEG befindet sich im Moment in der Mobilfunkzelle 09156.
Presence: Online
   Das Kommunikationsendgerät KEG ist eingeschaltet und kommunikationsbereit.
Bonuspunkte: 538
   Das Kommunikationsendgerät KEG oder dessen Nutzer hat unter Verwendung der Kennung "5136" in der Vergangenheit bereits Dienste des Dienstendgerätes DEG in Anspruch genommen und dafür 538 Bonuspunkte (= Prämienpunkte, die später beispielsweise gegen Prämiendatenlieferungen eingetauscht werden können) erhalten.
Tarifdaten: 0,03 €/KB
   Der Dienst der WAP-Seiten-Lieferung wird abgerechnet unter Zugrundelegung eines Tarifs von 0,03 € pro 1 KB übertragener Datenmenge.
Vorlieben: Wetter
   Unter Benutzung der Kennung "5136" wurden in der Vergangenheit bevorzugt Informationen über das aktuelle Wetter abgerufen.

Weitere Verfahrensschritte sind in Figur 1 dargestellt.

Die Anonymisierungseinheit AE greift nach Empfang der Anfragenachricht 2 auf den Datenspeicher DS zu und liest aus der Profiltabelle PT des Datenspeichers DS die Information aus, ob zu dem Kennzeichen MSISDN = 0170 7813586 eine zugeordnete Kennung abgespeichert ist. Da in der Profiltabelle PT die im Zusammenhang mit der Figur 2 erläuterte Zuordnung Z abgespeichert ist, liefert der Datenspeicher DS als Antwortnachricht die Kennung "5136" an die Anonymisierungseinheit AE zurück. Die Datenübertragung zwischen der Anonymisierungseinheit AE und dem Datenspeicher DS ist mittels eines Pfeils 4 symbolisiert. (Hätte die Anfrage ergeben, dass in der Profiltabelle PT keine zu dem Kennzeichen MSISDN zugeordnete Kennung abgespeichert ist, so hätte die Anonymisierungseinheit AE eine neue eindeutige Kennung (beispielsweise in Form der Zeichenkette 5138) erstellt, dem entsprechenden Kennzeichen MSISDN zugeordnet (neue Zuordnung Z2) und diese Zuordnung Z2 in Form einer neuen Tabellenzeile in der Profiltabelle PT abgespeichert (in der Figur 2 nicht dargestellt). Daraufhin hätte die Anonymisierungseinheit AE diese neue Kennung an den Netzanschlussknoten NAK übertragen.)

Nachdem die Anonymisierungseinheit AE die Kennung "5136" von dem Datenspeicher DS erhalten hat, sendet sie diese Kennung mit einer Anfrageantwortnachricht 5 an den Netzanschlussknoten NAK. In dem Netzanschlussknoten NAK wird das Kennzeichen "MSISDN" der Nachricht 1 durch die Kennung "5136" ersetzt und die derart veränderte, die Kennung "5136" enthaltende Nachricht 6 wird daraufhin an das Dienstendgerät DEG weitergeleitet.

Das Dienstendgerät DEG erzeugt daraufhin eine Nachricht 8 (mit der es den Empfang der veränderten Nachricht 4 bestätigt), adressierte diese Nachricht 8 mit der anonymisierten Kennung "5136" und sendet diese Nachricht 8 an das Kommunikationsendgerät KEG zurück. Die Nachricht 8 gelangt daraufhin zunächst einmal zu dem Netzanschlussknoten NAK. Der Netzanschlussknoten NAK sendet eine weitere Anfragenachricht 9 (welche die Kennung "5136" enthält) an die Anonymisierungseinheit AE. Die Anonymisierungseinheit AE liest aus dem Datenspeicher DS aus, dass zu der Kennung "5136" das Kennzeichen "MSISDN = 0170 7813586" zugeordnet ist und sendet dieses Kennzeichen MSISDN mittels einer weiteren Anfrageantwortnachricht 10 an den Netzanschlussknoten NAK zurück. Der Netzanschlussknoten NAK ersetzt die Kennung der Nachricht 8 durch das Kennzeichen MSISDN und sendet die derart veränderte Nachricht 12 an ihr Ziel, an das Kommunikationsendgerät KEG. Die eigentliche Diensterbringung (hier: das Versenden von WAP-Seiten) erfolgt durch das Dienstendgerät DEG zu einem späteren Zeitpunkt durch Versenden von Nachrichten ähnlich der oben beschriebenen Nachricht 8 an das Kommunikationsendgerät KEG.

Somit wird eine Kommunikation zwischen dem Kommunikationsendgerät KEG des Telekommunikationsnetzes und dem telekommunikationsnetzexternen Dienstendgerät DEG ermöglicht, bei der die wahre Identität (Kennzeichen MSISDN) des Kommunikationsendgerätes KEG vor dem Dienstendgerät DEG verborgen wird, und bei der dem Dienstendgerät DEG lediglich eine anonymisierte Kennung (welche temporär dem Kommunikationsendgerät KEG zuordnet ist) bekannt gegeben wird. Mit dieser anonymisierten Kennung kann das Dienstendgerät DEG jedoch vorteilhafterweise auch "von sich aus" mit dem Kommunikationsendgerät KEG kommunizieren (beispielsweise bei sogenannten Push-Diensten), da das Dienstendgerät DEG Nachrichten an das Kommunikationsendgerät KEG mit der anonymisierten Kennung adressieren kann und diese daraufhin zuverlässig zu dem Kommunikationsendgerät KEG übermittelt werden.

Die Anonymisierungseinheit AE bildet einen zentralen Knoten des Telekommunikationsnetzes TKN. Der Begriff "zentraler Knoten" beschreibt hier eine logische Zentralisierung, das heißt, die in dem Telekommunikationsnetz TKN auftretenden Anonymisierungsvorgänge für verschiedenste Dienste verschiedenster Dienstendgeräte und für unterschiedliche Kommunikationsendgeräte werden von einer zentralen Netzstelle (nämlich der Anonymisierungseinheit AE) durchgeführt. Dies schließt nicht aus, dass die Anonymisierungseinheit AE im Detail betrachtet auf zwei oder mehrere Rechner verteilt realisiert sein kann, welche bei dem Anonymisierungsverfahren zusammenarbeiten.

Die Anonymisierungseinheit AE (Anonymisierungsserver AE) ist also diejenige Instanz des Telekommunikationsnetzes, in der die wahre Identität des Kommunikationsendgerätes KEG (in Form des Kennzeichens MSISDN), die anonyme Kennung und die zugehörigen Teilnehmerdaten abgespeichert sind. Diese Anonymisierungseinheit kann beispielsweise von dem Betreiber des Telekommunikationsnetzes betrieben werden. Die Anonymisierungseinheit kann auch als ein "Anonymized Subscriber Identity Server" bezeichnet werden.

Wie oben bereits im Zusammenhang mit Figur 2 erläutert, sind in der Profiltabelle des Datenspeichers DS zu der anonymisierten Kennung mehrere Teilnehmerdaten abgespeichert. Diese Teilnehmerdaten, die zum Teil netzinterne Daten (wie "location" oder "presence") darstellen, können bei dem erfindungsgemäßen Verfahren durch das telekommunikationsnetzexterne Dienstendgerät DEG genutzt werden. Im vorliegenden Ausführungsbeispiel benötigt das Dienstendgerät DEG die Information, ob der sich hinter der anonymisierten Kennung "5136" verbergende Teilnehmer mit dem Kommunikationsendgerät KEG eine ausreichende Anzahl von Bonuspunkten erworben hat, um diesem Teilnehmer die gewünschten WAP-Seiten als Prämiensendung zuzusenden. Daher sendet das Dienstendgerät DEG eine die Kennung "5136" enthaltende Abfragenachricht AN an die Anonymisierungseinheit. In der Abfragenachricht AN ist die Information enthalten, dass das Dienstendgerät DEG die Anzahl der Bonuspunkte des entsprechenden Teilnehmers benötigt. Daraufhin liest die Anonymisierungseinheit AE über die Verbindung 4 die Anzahl der Bonuspunkte aus der Profiltabelle PT aus und übermittelt diese Anzahl (in diesem Ausführungsbeispiel: 538 Bonuspunkte) mittels einer Abfrageantwortnachricht ANR an das Dienstendgerät DEG.

Das Dienstendgerät DEG veranlasst daraufhin das Telekommunikationsnetzes TKN, dem Teilnehmer für seine aktuelle WAP-Seiten-Bestellung weitere Bonuspunkte gutzuschreiben. Dazu sendet das Dienstendgerät DEG eine die Kennung "5136" enthaltende Einschreibnachricht EN an die Anonymisierungseinheit AE; mit der Einschreibnachricht EN wird eine neue erhöhte Bonuspunktanzahl (z.B. 552 Bonuspunkte) an die Anonymisierungseinheit AE übertragen. Die Anonymisierungseinheit AE speichert diese neue Bonuspunktanzahl in der Profiltabelle PT ab und sendet eine Quittungsnachricht ENR an das Dienstendgerät DEG zurück.

Das Dienstendgerät DEG kann in der Anonymisierungseinheit AE ablaufenden Prozesse auch derart beeinflussen (administrieren), dass diese in Zukunft ein vom Dienstendgerät DEG gewünschtes Verhalten zeigen. Dazu sendet das Dienstendgerät DEG eine Administrationsnachricht ADN an die Anonymisierungseinheit AE, diese Administrationsnachricht ADN enthält die Kennung "5136" sowie die Information, dass in Zukunft bei jeder Übermittlung einer WAP-Seiten-Bestellung von diesem Kommunikationsendgerät KEG zu dem Dienstendgerät DEG von der Anonymisierungseinheit AE automatisch eine bestimmte Anzahl Bonuspunkte in der Profiltabelle gutgeschrieben werden soll. Die Anonymisierungseinheit AE bestätigt den Empfang der Administrationsnachricht ADN mit einer Antwortnachricht ADNR und wird in Zukunft selbsttätig bei jeder Bestellung die bestimmte Anzahl Bonuspunkte gutschreiben.

Die vorstehend am Beispiel der Bonuspunkte beschriebenen Abläufe sind lediglich beispielhaft zu verstehen, ähnliche und analoge Abläufe können selbstverständlich auch die anderen Teilnehmerdaten (Gültigkeitsdauer, Location, Presence, Tarifdaten oder Vorlieben) betreffen. Als ein weiteres Ausführungsbeispiel soll erwähnt werden, dass das Dienstendgerät DEG mittels einer weiteren Abfragenachricht AN die Gültigkeitsdauer der anonymisierten Kennung abfragen kann, mittels einer weiteren Einschreibnachricht EN diese Gültigkeitsdauer schreiben verändern kann oder mittels einer Gültigkeitsdauer-Administrationsnachricht ADN die Anonymisierungseinheit AE derart administrieren bzw. anweisen kann, dass diese z.B. bei jeder Neuerstellung einer anonymisierten Kennung für den jeweiligen Teilnehmer die Gültigkeitsdauer auf einen von dem Dienstendgerät DEG vorbestimmten Wert setzt. Mittels einer solchen Gültigkeitsdauer-Administrationsnachricht kann die Anonymisierungseinheit AE auch dazu veranlasst werden, die jeweilige Gültigkeitsdauer sofort zu verändern (d.h. zu verlängern oder zu verkürzen).

Ebenso kann mit einer Administrationsnachricht ADN die Anonymisierungseinheit AE derart beeinflusst werden, dass diese diejenigen Gültigkeitsdaten, die dem Teilnehmer mit der jeweiligen Kennung beigeordnet sind, verändert. Dadurch kann die Gültigkeitsdauer für diesen Teilnehmer verlängert oder auch verkürzt werden; im Extremfall kann die Gültigkeitsdauer auf Null gesetzt werden, wodurch die entsprechende Zuordnung ungültig wird.

Wenn eine Gültigkeitsdauer für eine anonymisierte Kennung in der Profiltabelle PT eingetragen ist, so prüft die Anonymisierungseinheit AE bei Erhalt einer Anfragenachricht 2 oder 9 des Netzanschlussknotens NAK zuerst, ob die Gültigkeitsdauer der jeweiligen Zuordnung abgelaufen ist. Ist dies der Fall, so wird von der Anonymisierungseinheit AE nicht das gesuchte Kennzeichen oder die gesuchte Kennung aus dem Datenspeicher DS ausgelesen und damit das jeweilige Ersetzen der Kennung durch das Kennzeichen bzw. das Ersetzen des Kennzeichens durch die Kennung unterbunden.

Das erfindungsgemäße Verfahren eröffnet den Betreibern des Telekommunikationsnetzes vorteilhafterweise die Möglichkeit, netzinterne Teilnehmerdaten (wie beispielsweise Location-Informationen oder Presence-Informationen) an netzexterne Dienstanbieter zu liefern und dennoch die auf Seiten des Telekommunikationsnetzes gewünschten und möglicherweise sogar gesetzlich vorgeschriebenen Datenschutzbestimmungen einzuhalten. Da nämlich dem Dienstendgerät bzw. dessen Dienstanbieter zusammen mit den datenschutzrelevanten Teilnehmerdaten lediglich die anonymisierte Kennung bekannt wird, ist ein Missbrauch dieser Teilnehmerdaten durch den Dienstanbieter nicht möglich und den Datenschutzbestimmungen wird entsprochen. Der Telekommunikationsnetzbetreiber behält also die volle Kontrolle über die kommunikationsendgerätebezogenen Teilnehmerdaten (Customer Care) und gibt lediglich anonymisierte Daten aus dem Telekommunikationsnetz (aus der sogenannten Mobile Network Operator Domain) heraus.

## Patentansprüche

1. Verfahren zur Kommunikation mit einem Dienstendgerät (DEG) eines Dienstanbieters, welches mit einem Netzanschlussknoten (NAK) eines Telekommunikationsnetzes (TKN) verbunden ist, bei dem
- eine von einem mit dem Telekommunikationsnetz (TKN) verbundenen Kommunikationsendgerät (KEG) zu dem Dienstendgerät (DEG) abgesandte Nachricht (1), welche als Absenderinformation ein telekommunikationsnetzseitig festgesetztes Kennzeichen (MSISDN) enthält, zu dem Netzanschlussknoten (NAK) übertragen wird,
- auf ein Eintreffen der Nachricht (1) bei dem Netzanschlussknoten (NAK) hin von einer Anonymisierungseinheit (AE) des Telekommunikationsnetzes eine dem Kennzeichen (MSISDN) zugeordnete (Z) anonymisierte Kennung (5136) ermittelt (2,4,5) wird,
- das Kennzeichen (MSISDN) der Nachricht durch die Kennung (5136) ersetzt wird, und
- daraufhin die so veränderte Nachricht (6) zu dem Dienstendgerät (DEG) weitergeleitet wird.

2. Verfahren zur Kommunikation mit einem Dienstendgerät (DEG) eines Dienstanbieters, welches mit einem Netzanschlussknoten (NAK) eines Telekommunikationsnetzes (TKN) verbunden ist, bei dem
- eine von dem Dienstendgerät (DEG) zu einem mit dem Telekommunikationsnetz (TKN) verbundenen Kommunikationsendgerät (KEG) abgesandte Nachricht (8), welche als Adressinformation eine anonymisierte Kennung (5136) enthält, zu dem Netzanschlussknoten (NAK) übertragen wird,
- auf ein Eintreffen der Nachricht (8) bei dem Netzanschlussknoten (NAK) hin von einer Anonymisierungseinheit (AE) des Telekommunikationsnetzes aufgrund einer vorgewählten Zuordnung ein telekommunikationsnetzseitig festgesetztes, der Kennung (5136) zugeordnetes (Z) Kennzeichen (MSISDN) ermittelt (9,4,10) wird,
- die Kennung (5136) der Nachricht durch das Kennzeichen (MSISDN) ersetzt wird, und
- daraufhin die so veränderte Nachricht (12) zu dem Kommunikationsendgerät (KEG) weitergeleitet wird.

3. Verfahren nach Anspruch 1 oder 2,
**dadurch gekennzeichnet, dass**
- als Anonymisierungseinheit (AE) ein zentraler Knoten des Telekommunikationsnetzes (TKN) verwendet wird.

4. Verfahren nach einem der vorhergehenden Ansprüche,
**dadurch gekennzeichnet, dass**
- von der Anonymisierungseinheit (AE) neben dem Kennzeichen und der zugeordneten Kennung weitere dem Teilnehmer zugehörige Teilnehmerdaten (TD) abgespeichert werden.

5. Verfahren nach Anspruch 4,
**dadurch gekennzeichnet, dass**
- auf eine die Kennung enthaltende Abfragenachricht (AN) des Dienstendgerätes (DEG) hin mindestens einzelne der mit der Kennung abgespeicherten Teilnehmerdaten zu dem Dienstendgerät (DEG) übertragen (ANR) werden.

6. Verfahren nach Anspruch 4 oder 5,
**dadurch gekennzeichnet, dass**
- auf eine die Kennung enthaltende Administrationsnachricht (ADN) des Dienstendgerätes (DEG) hin von der Anonymisierungseinheit (AE) der Inhalt mindestens einzelner der mit der Kennung abgespeicherten Teilnehmerdaten verändert wird.

7. Verfahren nach einem der Ansprüche 4 bis 6,
**dadurch gekennzeichnet, dass**
- auf eine die Kennung und einzuschreibende Teilnehmerdaten enthaltende Einschreibnachricht (EN) des Dienstendgerätes (DEG) hin von der Anonymisierungseinheit (AE) die einzuschreibenden Teilnehmerdaten neben dem Kennzeichen und der zugeordneten Kennung abgespeichert werden.

8. Verfahren nach einem der Ansprüche 4 bis 7,
**dadurch gekennzeichnet, dass**
- als Teilnehmerdaten Gültigkeitsdaten verwendet werden, welche Informationen über eine zeitliche Gültigkeitsdauer der Kennung beinhalten.

9. Verfahren nach Anspruch 8,
**dadurch gekennzeichnet, dass**
- bei einem Ablauf der Gültigkeitsdauer von der Anonymisierungseinheit (AE) das jeweilige Ersetzen von der Kennung und von dem Kennzeichen unterbunden wird.

10. Verfahren nach Anspruch 8 oder 9,
**dadurch gekennzeichnet, dass**
- als Administrationsnachricht eine Gültigkeitsdauer-Administrationsnachricht (ADN) von dem Dienstendgerät (DEG) zu der Anonymisierungseinheit (AE) übertragen wird, woraufhin von der Anonymisierungseinheit (AE) diejenigen Gültigkeitsdaten, die dem Teilnehmer mit der jeweiligen Kennung beigeordnet sind, derart verändert werden, dass die zeitliche Gültigkeitsdauer verkürzt oder verlängert wird.

11. Verfahren nach einem der Ansprüche 4 bis 10,
**dadurch gekennzeichnet, dass**
- als Teilnehmerdaten Ortsdaten verwendet werden, welche Informationen über den aktuellen Aufenthaltsort des Kommunikationsendgeräts (KEG) beinhalten.

12. Verfahren nach einem der Ansprüche 4 bis 11,
**dadurch gekennzeichnet, dass**
- als Teilnehmerdaten Präsenzdaten verwendet werden, welche Informationen über die Erreichbarkeit des Teilnehmers über das Kommunikationsendgerät (KEG) beinhalten.

13. Verfahren nach einem der Ansprüche 4 bis 12,
**dadurch gekennzeichnet, dass**
- als Teilnehmerdaten Bonusdaten verwendet werden, welche Informationen über bereits durchgeführte Dienstnutzungen des Teilnehmers beinhalten.

14. Verfahren nach einem der Ansprüche 4 bis 13,
**dadurch gekennzeichnet, dass**
- als Teilnehmerdaten Tarifdaten verwendet werden, welche Informationen über eine Abrechnung von teilnehmerseitigen Dienstnutzungen beinhalten.

15. Verfahren nach einem der Ansprüche 4 bis 14,
**dadurch gekennzeichnet, dass**
- als Teilnehmerdaten Präferenzdaten verwendet werden, welche Informationen über die Art von bereits durchgeführten Dienstnutzungen des Teilnehmers beinhalten.

16. Verfahren nach einem der vorhergehenden Ansprüche,
**dadurch gekennzeichnet, dass**
- von der Anonymisierungseinheit (AE) des Telekommunikationsnetzes die dem Kennzeichen (MSISDN) zugeordnete (Z) anonymisierte Kennung (5136) ermittelt (2,3) wird, indem aus einem Datenspeicher ausgelesen wird, ob zu dem Kennzeichen bereits eine zugeordnete Kennung abgespeichert ist,
- bei Vorliegen einer solchen abgespeicherten Kennung diese abgespeicherte Kennung als ermittelte Kennung verwendet wird, oder
- bei Nichtvorliegen einer solchen abgespeicherten Kennung eine neue Kennung erstellt und dem Kennzeichen zugeordnet wird, diese neue Kennung zusammen mit dem Kennzeichen in dem Datenspeicher abgespeichert wird und diese neue Kennung als ermittelte Kennung verwendet wird.
